# FASCICULE DE BREVET EUROPEEN

(11) **EP 3 383 948 B1**
(45) Date de publication et mention de la délivrance du brevet: **04.09.2019**
(21) Numéro de dépôt: 16808985.2
(22) Date de dépôt: 05.12.2016
(51) Int. Cl.: C08L 27/06, C08K 5/544, C08K 5/057, C08K 5/098, C08K 5/53, C08J 5/10, C08K 7/14

(54) **PROCÉDÉ D'APPLICATION SUR UNE SURFACE INORGANIQUE D'UNE COMPOSITION PVC PRÉSENTANT UNE ADHÉSION AMÉLIORÉE AUX SURFACES**
VERFAHREN ZUM AUFBRINGEN EINER PVC-ZUSAMMENSETZUNG MIT EINER VERBESSERTEN ADHÄSION AUF ANORGANISCHEN OBERFLÄCHEN
PROCESS FOR APPLICATION ON A INORGANIC SURFACE OF A PVC COMPOSITION PRESENTING AN IMPROVED ADHESION ON SURFACES

(30) Priorité: 04.12.2015 FR 1561854
(43) Date de publication de la demande: 10.10.2018
(73) Titulaire: Resinoplast, 51100 Reims (FR)
(72) Inventeur: SELLAK, Radouane, 25200 Bethoncourt (FR); KHARIJ, Saloua, 51420 Witry-les-Reims (FR); DUPREZ, Virginie, Eva, Severine, 51100 Reims (FR)
(74) Mandataire: Lavoix
(86) Numéro de dépôt international: PCT/EP2016/079790
(87) Numéro de publication internationale: WO 2017/093571

(56) Documents cités:
- DE-A1- 4 034 152
- FR-A- 1 443 750
- GB-A- 2 320 503
- US-A- 3 998 985
- US-A- 5 261 721
- US-A- 5 279 882

## Description

La présente invention concerne un procédé d'application d'une composition PVC (polychlorure de vinyle) présentant une adhésion améliorée sur une surface inorganique. La présente invention concerne également une composition PVC (polychlorure de vinyle), notamment auto-adhérente, présentant une adhésion améliorée aux surfaces, notamment surface en verre ou métal, tel qu'acier. La présente invention concerne notamment le domaine automobile et plus particulièrement l'adhésion des joints PVC autour d'une custode en verre.

Dans le domaine automobile, la technique d'encapsulation, notamment de custode en verre, consiste à injecter un matériau thermoplastique autour d'une vitre. Généralement, l'encapsulation des vitres par les matériaux thermoplastiques élastomères (TPE), plus particulièrement le PVC, nécessite un traitement consistant à déposer, notamment manuellement une couche d'activateur ainsi qu'une couche de primer autour de la vitre destinée à être encapsulée pour assurer l'adhésion entre la surface du verre et le matériau thermoplastique. Puis la vitre ainsi traitée est placée dans un moule pour être encapsulée.

Il est connu de WO9614985 l'utilisation d'une couche intermédiaire auto-adhérente sur le verre qui comprend une couche support comprenant un PVC plastifié et une couche adhésive copolymère. Il est donc nécessaire d'ajouter une couche intermédiaire de copolymères pour que le film PVC adhère sur le verre. En effet, le PVC seul n'a pas de propriétés adhérentes. Cependant, la présence d'une couche intermédiaire ne permet pas une adhésion de qualité suffisante et le système obtenu (verre/couche intermédiaire/PVC) est pelable.

Il est également connu de GB2320503 et US4277538 l'ajout de silane dans la composition PVC pour la rendre auto-adhérente au verre.

US 3 998 985 décrit un PVC mélangé à deux types de silanes, un primaire à base d'amino- silane et un polyamino silane, l'objectif étant d'améliorer l'adhésion sur verre. FR 1 443 750 décrit des compositions obturantes à base de PVC plastisol et d'aminosilane en vue d'améliorer l'adhésion sur des surfaces métalliques.

Les principaux inconvénients des systèmes susmentionnés concernent d'abord le champ d'application puisque le procédé de mise en oeuvre est exclusivement réservé au calandrage alors que la présente technologie s'étend sur tout type de transformation et de préférence à l'injection, ou à l'extrusion. De plus l'épaisseur de la couche de PVC plastifié revendiquée reste faible et se situe entre 0,1 µm et 20 mm. Il n'est donc pas possible de mettre en oeuvre des couches plus épaisses de PVC tout en conservant les propriétés d'adhésion.

Il existe par conséquent un intérêt à fournir un procédé amélioré d'application, sur une surface inorganique, d'une composition PVC présentant des propriétés d'adhésion aux surfaces sur une surface inorganique, tout comme il existe un intérêt à fournir une composition PVC présentant des propriétés d'adhésion aux surfaces.

L'objectif de la présente invention est de fournir un procédé amélioré d'application, sur une surface inorganique, d'une composition PVC présentant des propriétés d'adhésion aux surfaces.

Un autre objectif de la présente invention est de fournir un additif qui, ajouté à une composition PVC, permet de lui apporter des propriétés auto-adhérentes.

Un autre objectif de la présente invention est de fournir une telle composition PVC auto-adhérente présentant des propriétés d'adhésion aux surfaces améliorées par rapport aux technologies de l'art antérieur.

Un autre objectif de la présente invention est de fournir une telle composition pouvant être utilisée dans une large gamme d'épaisseur sans dégrader la qualité de l'adhésion.

Un autre objectif encore de la présente invention est de fournir un procédé de préparation de cette composition.

D'autres objectifs apparaîtront à la lecture de la description de l'invention qui suit.

Les objectifs précités sont remplis par la présente invention qui concerne un procédé d'application, sur une surface inorganique, d'une composition PVC auto-adhérente comprenant une composition (C) qui comprend :
- un aminosilane protégé ou non ; et
- au moins un composé choisi parmi un complexe de titane, un complexe de zirconium et/ou un composé isocyanate protégé ou non ;
ledit procédé comprenant une étape d'activation de ladite surface choisie parmi un traitement thermique, une étape de microbillage, une étape de traitement plasma, un nettoyage par solvant ou une étape de silicalisation.

La présente invention concerne également une composition (C) comprenant au moins un aminosilane et au moins un complexe de titane et/ou au moins un complexe de zirconium.

La composition (C) peut également comprendre au moins un composé choisi parmi un complexe de titane.

La présente invention décrit également une composition (C') comprenant un aminosilane protégé ou non ; et au moins un composé choisi parmi un complexe de titane, un complexe de zirconium et/ou un composé isocyanate protégé ou non.

La présente invention vise plus particulièrement les surfaces inorganiques dans le domaine automobile. De préférence selon l'invention, la surface est une surface en verre, en métal ou en céramique, de préférence verre ou métal. La surface en métal est de préférence une surface de fer, acier, de préférence acier inoxydable, aluminium, cuivre, bronze, nickel, zinc, etc. Dans un mode de réalisation préféré, la surface inorganique est une surface en verre.

Dans un autre mode de réalisation préféré, la surface inorganique est une surface en acier inox ou en aluminium.

Selon l'invention, la composition (C) comprend un aminosilane protégé ou non ; et au moins un composé choisi parmi un complexe de titane, un complexe de zirconium ou un composé isocyanate protégé ou non.

De préférence, dans le cadre de la présente invention, l'aminosilane est choisi parmi les silanes fonctionnalisés par un groupement chimique aminé, seuls ou en mélange. De préférence l'aminosilane est choisi parmi les aminosilanes comprenant une fonction amine primaire ou secondaire, de préférence une fonction amine primaire. La fonction amine peut être protégée, par toute fonction connue de l'homme du métier pour protéger les amines, notamment par toute fonction protectrice connue de l'homme du métier pour protéger la fonction amine et libérer la fonction amine à haute température, notamment à une température comprise entre 100 et 250°C, de préférence entre 150 et 210°C. De préférence, la fonction protectrice de la fonction amine est une fonction alkoxycarbonyl, l'alkyl étant en C1 à C10, linéaire ou ramifié, de préférence la fonction protectrice est le tert-butoxycarbonyle.

De façon particulièrement avantageuse, la protection de la fonction amine permet de protéger l'aminosilane lors de la mise en oeuvre de la composition PVC à haute température, notamment entre 150 et 220°C, de préférence entre 170 et 200°C. A ces températures, la fonction amine est libérée et peut alors réagir avec le PVC. La présence de la fonction protection permet également d'augmenter la concentration en aminosilane dans la composition (C) de l'invention ou dans la composition PVC et permet avantageusement d'améliorer les propriétés auto-adhérentes de la composition PVC obtenue. La présence de la fonction protection de la fonction amine permet également d'améliorer la stabilité au stockage de la composition PVC avant que celle-ci soit utilisée.

L'aminosilane selon l'invention peut notamment être un composé de formule (I)

(RO)₃Si-L¹-R¹ (I)

dans laquelle :
R, tous identiques ou différents, représente une chaine alkyle, linéaire ou ramifiée, comprenant de 1 à 15 atomes de carbone, de préférence de 1 à 10 atomes de carbone, de préférence de 1 à 5 atomes de carbone, par exemple méthyle, éthyle ;
L¹, représente Alk, Alk-NR²-Alk ou Alk-NR²-Alk-NR²-Alk, Alk, identiques ou différents, étant une chaine alkyle, linéaire ou ramifiée, comprenant de 1 à 15 atomes de carbone, de préférence de 1 à 10 atomes de carbone, de préférence de 1 à 5 atomes de carbone ; R¹ représente NHR² ou Si(OR)₃ ;
R², tous identiques ou différents, représente un atome d'hydrogène ou un groupe C(O)-alkyle, l'alkyle, linéaire ou ramifié, comprenant de 1 à 10 atomes de carbone, de prédérence C(O)-tBu.

De préférence, l'aminosilane est choisi parmi les composés suivants, seuls ou en mélange : 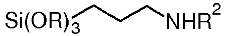 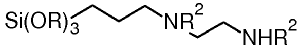 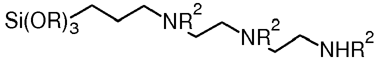 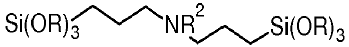 dans lesquels
R, tous identiques ou différents, représente une chaine alkyle, linéaire ou ramifiée, comprenant de 1 à 15 atomes de carbone, de préférence de 1 à 10 atomes de carbone, de préférence de 1 à 5 atomes de carbone, par exemple méthyle, éthyle ;
R², tous identiques ou différents, représente un atome d'hydrogène ou un groupe C(O)-alkyle, l'alkyle, linéaire ou ramifié, comprenant de 1 à 10 atomes de carbone, de prédérence C(O)-tBu.

De façon particulièrement préférée, l'aminosilane est choisi parmi le 3-aminopropyltriethoxysilane et le 3-trimethoxysilylpropyldiethylenetriamine, seuls ou en mélange. De façon particulière l'aminosilane, et notamment les exemples préférés donnés ci-dessus, est protégé par un groupe fonctionnel tert-butoxycarbonyle.

De préférence, dans le cadre de la présente invention, les complexes de titane et/ou les complexes de zirconium peuvent être utilisés seuls ou en mélange.

De préférence les complexes de titane sont choisis parmi les complexes de formule (R³O-)ₙTi(O-X-R⁴-Y)₄₋ₙ dans laquelle :
R³ représente une chaîne alkyle, linéaire ou ramifiée, comprenant de 1 à 15 atomes de carbone, de préférence de 1 à 10 atomes de carbone, de préférence de 1 à 5 atomes de carbone ;
R⁴ représente une chaîne alkyle, linéaire ou ramifiée, comprenant de 1 à 15 atomes de carbone, de préférence de 1 à 10 atomes de carbone, de préférence de 1 à 5 atomes de carbone, éventuellement substituée par un ou plusieurs =O ;
X représente un groupe C=O ou P=O ;
Y représente une fonction amine (NH₂) ou bien une chaîne alkyle linéaire ou ramifié comprenant de 1 à 5 atome de carbone, de préférence CH₃, éventuellement substituée par un ou plusieurs =O ;
n représente un nombre entier compris entre 0 et 4, de préférence 1, 2 ou 3.

Le complexe de titane est de préférence choisi parmi le tétra-n-butyl titanate et le Bis[2-[(2-aminoethyl)amino]ethanolato][2-[(2-aminoethyl)amino]ethanolato-O](propan-2-olato)titanate, seuls ou en mélange.

De préférence les complexes de zirconium sont choisis parmi les complexes de formule (R³O-)ₙZr(O-X-R⁴-Y)₄₋ₙ dans laquelle :
R³ représente une chaîne alkyle, linéaire ou ramifiée, comprenant de 1 à 15 atomes de carbone, de préférence de 1 à 10 atomes de carbone, de préférence de 1 à 5 atomes de carbone ;
R⁴ représente une chaîne alkyle, linéaire ou ramifiée, comprenant de 1 à 15 atomes de carbone, de préférence de 1 à 10 atomes de carbone, de préférence de 1 à 5 atomes de carbone, éventuellement substituée par un ou plusieurs =O ;
X représente un groupe C=O ou P=O ;
Y représente une fonction amine (NH₂) ou bien une chaîne alkyle linéaire ou ramifié comprenant de 1 à 5 atome de carbone, de préférence CH₃, éventuellement substituée par un ou plusieurs =O;
n représente un nombre entier compris entre 0 et 4, de préférence 1, 2 ou 3.

De préférence dans le cadre de la présente invention, l'isocyanate est choisi parmi les isocyanates monofonctionnels, difonctionnels ou polyfonctionnels. En particulier, l'isocyanate peut être choisi parmi les isocyanates aliphatiques, aromatiques et alicycliques et les polyisocyanates.

De préférence dans le cadre la présente invention, l'isocyanate peut être choisi parmi :
- les polyisocyanates issus de monomères isocyanates tels que le diisocyanate hexaméthylène (HDI), le diisocyanate de toluène, le diisocyanate isophorone (IPDI), le diisocyanate de diphénylméthylène (MDI), ou le diisocyanate de diphénylméthylène polymérisé (PMDI) ;
- les composés de formule (I) : 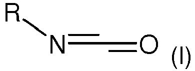 avec R représente :
   ∘ une chaine alkyle, linéaire ou ramifiée, comprenant de 1 à 15 atomes de carbone, de préférence de 1 à 10 atomes de carbone, de préférence de 1 à 5 atomes de carbone, ou
   ∘ un groupement aryle comprenant de 6 à 15 atomes de carbone, de préférence de 6 à 10 atomes de carbone, ou
   ∘ un groupement cycloalkyle, comprenant de 3 à 15 atomes de carbone, de préférence de 3 à 10 atomes de carbone,
   le groupement R pouvant comprendre de 1 à 10, de préférence 1 à 5 hétéroatomes choisis parmi N, O, S, et/ou être substitué par un groupement fonctionnel choisi parmi un groupe hydroxyle, isocyanate, allophanate, amino.;
- les composés de formule (II) 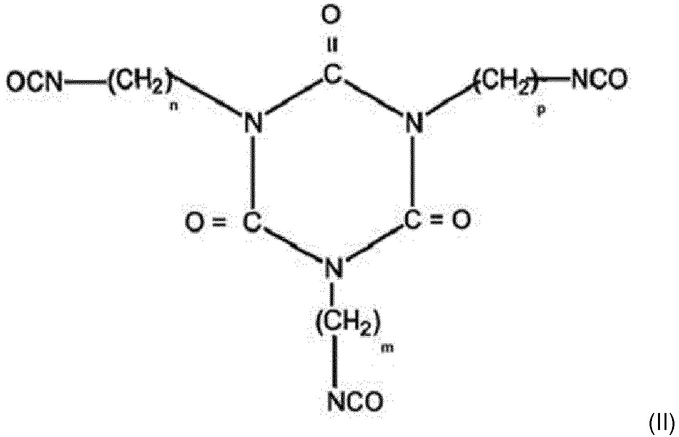
- avec n, m et p, identiques ou différents, des entiers compris entre 1 et 10.

De préférence selon l'invention, l'isocyanate est choisi parmi polyisocyanates issus de monomères isocyanates tels que le diisocyanate hexaméthylène (HDI), le diisocyanate de toluène, le diisocyanate isophorone (IPDI), le diisocyanate de diphénylméthylène (MDI), ou le diisocyanate de diphénylméthylène polymérisé (PMDI). De préférence il est choisi parmi les composés Desmodur® commercialisés par Covestro, en particulier ceux à base de HDI. De préférence l'isocyanate compris dans la composition (C) est le Desmodur® BL 3272 MPA.

De préférence selon l'invention, la fonction isocyanate de l'isocyanate peut être protégée par toute fonction connue de l'homme du métier pour protéger les isocyanates, notamment par toute fonction protectrice connue de l'homme du métier pour protéger la fonction isocyanate et libérer la fonction isocyanate à haute température, notamment à une température comprise entre 100 et 250°C, de préférence entre 150 et 210°C. De préférence, la fonction protectrice de la fonction isocyanate est choisie parmi les fonctions imine, alcool, cétoximes, amides, thiol, de préférence la fonction protectrice de la fonction isocyanate est une fonction imine. De préférence, quand la fonction protectrice est choisie parmi les imines, elle est choisie parmi 2-oxohexamethyleneimine ou succinimide. De préférence quand la fonction protectrice est choisie parmi les alcools elle est choisie parmi 2-trifluoroéthanol, 2-trichloroéthanol, n-butanol, 2,6-diméthylphénol ou cardanol. De préférence quand la fonction protectrice est un cétoxime, elle est choisie parmi méthyl ethyl cétoxime ou diisopropylcétoxime. De préférence quand la fonction protectrice est un thiol, c'est un hexane thiol. De préférence quand la fonction protectrice est un amide, c'est le caprolactame. De préférence, la fonction protectrice est 2-oxohexamethyleneimine.

De façon particulièrement avantageuse, la protection de la fonction isocyanate permet de protéger l'isocyanate lors de la mise en oeuvre de la composition PVC à température, notamment entre 100 et 200°C, de préférence entre 140 et 180°C. A ces températures, la fonction isocyanate est libérée et peut alors réagir avec le PVC. La présence de la fonction protection permet également d'augmenter la concentration en isocyanate dans la composition (C) de l'invention ou dans la composition PVC et permet avantageusement d'améliorer les propriétés auto-adhérentes de la composition PVC obtenue.

De façon avantageuse, quand la composition PVC auto-adhérente comprend un aminosilane et/ou un isocyanate protégé, la stabilité au stockage de la composition, avant application sur la surface, est améliorée par rapport à une composition PVC comprenant des aminosilane et/ou isocyanate non protégés.

Selon la présente invention, les groupements alkyle représentent des radicaux hydrocarbonés saturés, en chaîne droite ou ramifiée, comprenant de 1 à 15 atomes de carbone, de préférence de 1 à 10 atomes de carbone, de préférence de 1 à 5 atomes de carbone.

On peut notamment citer, lorsqu'ils sont linéaires, les groupements méthyle, éthyle, propyle, butyle, pentyle, hexyle, octyle, nonyle, décyle, dodécyle, hexadécyle, et octadécyle.

On peut notamment citer, lorsqu'ils sont ramifiés ou substitués par un ou plusieurs groupements alkyles, les groupes isopropyle, tert-butyl, 2-éthylhexyle, 2-méthylbutyle, 2-méthylpentyle, 1-méthylpentyle et 3-méthylheptyle.

Le radical cycloalkyle est un radical hydrocarboné mono-, bi- ou tri- cyclique saturé ou partiellement insaturé, non aromatique, de 3 à 15 atomes de carbone, de préférence de 3 à 10 atomes de carbone, tel que notamment le cyclopropyle, cyclopentyle, cyclohexyle ou adamantyle, ainsi que les cycles correspondants contenant une ou plusieurs insaturations.

Aryle désigne un système aromatique hydrocarboné, mono ou bicyclique de 6 à 15 atomes de carbone, de préférence de 6 à 10 atomes de carbone. Parmi les radicaux aryle, on peut notamment citer le radical phényle ou naphtyle, plus particulièrement substitué par un moins un atome d'halogène.

De préférence selon l'invention, la composition (C) comprend :
- un aminosilane, protégé ou non, tel que défini ci-dessus ; et
- un isocyanate, protégé ou non, tel que défini ci-dessus.

De préférence selon l'invention, la composition (C) comprend :
- un aminosilane, protégé ou non, tel que défini ci-dessus ; et
- un complexe de titane tel que défini ci-dessus.

De préférence selon l'invention, la composition (C) comprend :
- un aminosilane, protégé ou non, tel que défini ci-dessus ; et
- un complexe de zirconium tel que défini ci-dessus.

De préférence selon l'invention, la composition (C) comprend :
- un aminosilane, protégé ou non, tel que défini ci-dessus ;
- un complexe de titane tel que défini ci-dessus ; et
- un complexe de zirconium tel que défini ci-dessus.

De préférence selon l'invention, la composition (C) comprend :
- un aminosilane, protégé ou non, tel que défini ci-dessus ;
- un isocyanate, protégé ou non, tel que défini ci-dessus ; et
- un complexe de titane tel que défini ci-dessus.

De préférence selon l'invention, la composition (C) comprend :
- un aminosilane, protégé ou non, tel que défini ci-dessus ;
- un isocyanate, protégé ou non, tel que défini ci-dessus ; et
- un complexe de zirconium tel que défini ci-dessus.

De préférence selon l'invention, la composition (C) comprend :
- un aminosilane, protégé ou non, tel que défini ci-dessus ;
- un isocyanate, protégé ou non, tel que défini ci-dessus ;
- un complexe de titane tel que défini ci-dessus ; et
- un complexe de zirconium tel que défini ci-dessus.

Selon la nature de la surface inorganique la composition (C) mise en oeuvre peut varier.

De préférence, quand la surface est en verre, la composition (C) comprend un aminosilane protégé ou non et un isocyanate protégé, ou un aminosilane protégé ou non et un complexe de titane. De manière avantageuse, quand la surface est en verre, la composition (C) comprend un aminosilane protégé et un isocyanate protégé, ou un aminosilane non protégé et un complexe de titane.

De préférence, quand la surface est en métal, la composition (C) comprend un aminosilane protégé ou non et un isocyanate protégé, ou un aminosilane protégé ou non et un complexe de titane. De préférence, quand la surface est en métal, la composition (C) comprend un aminosilane protégé et un isocyanate protégé, ou un aminosilane protégé ou non et un complexe de titane.

La composition (C) de la présente invention comprend de préférence de 86 à 90% en poids d'aminosilane, de préférence de 83 à 87 %.

La composition (C) de la présente invention comprend de préférence de 10 à 14 % en poids d'un composé choisi parmi un complexe de titane, un complexe de zirconium et un isocyanate protégé ou non, de préférence de 13 à 17 % en poids. De préférence, quand la composition (C) de la présente invention comprend un isocyanate protégé ou non, celui-ci est présent en quantité allant de 10 à 13% en poids.

Quand la composition (C) comprend un aminosilane et un complexe de titane et/ou zirconium, la composition (C) de la présente invention comprend de préférence de 86 à 90 % en poids d'aminosilane, de préférence de 83 à 87 %, et de préférence de 10 à 14 % en poids de complexe de titane et/ou de complexe de zirconium, de préférence de 13 à 17 % en poids.

De façon préférée, la présente invention concerne une composition (C) constituée d'au moins un aminosilane et d'au moins un complexe de titane et/ou au moins un complexe de zirconium.

De préférence, la composition (C) est constituéee d'au moins un aminosilane et d'au moins un complexe de titane.

La composition (C) selon la présente invention peut en outre comprendre des composés apportant des fonctions d'adhésion sur les surfaces, par exemple un terpolymère type éthylène, acrylate de méthyle et méthacrylate de glycydile (Lotader AX8900, fournisseur Arkema), des produits contenants des fonctions chimiques isocyanates.

Dans le cadre de la présente invention on entend par « composition PVC » désigner une composition comprenant une résine PVC. Tout type de résine PVC peut être utilisée, notamment des résines PVC en suspension ou en émulsion.

La composition PVC selon l'invention comprend une composition (C) telle que définie ci-dessus.

Les inventeurs ont montré de façon surprenante que la composition (C) selon l'invention, peut être ajoutée dans la composition PVC de préférence à moins de 35 % en masse par rapport à la masse de la résine PVC, de préférence entre 5 et 25% en masse, plus préférentiellement entre 7 et 20 % en masse, par exemple 10% en masse. Ces proportions permettent avantageusement un compromis entre la conservation de la stabilité, notamment thermique, du PVC et l'apport de bonnes propriétés d'adhésion au PVC.

De façon particulièrement avantageuse, l'ajout de la composition (C) selon l'invention selon l'invention, dans une composition PVC permet d'apporter des propriétés adhérentes à ladite composition PVC. La présente invention permet d'atteindre des forces de pelage supérieures à 20 N, de préférence cette technologie permet d'atteindre des forces d'adhésion supérieure à 40 N.

La présente invention concerne également un procédé pour apporter des propriétés auto-adhérentes à une composition PVC comprenant l'ajout, à ladite composition PVC, d'une composition (C) selon l'invention. Les propriétés auto-adhérentes étant vis-à-vis de surfaces notamment en verre ou en acier.

De préférence, la composition (C) est ajoutée à ladite composition PVC à raison de moins de 30% en masse par rapport à la masse de la résine PVC, de préférence entre 1 et 25% en masse, plus préférentiellement entre 7 et 20% en masse, par exemple 10% en masse.

De façon particulièrement avantageuse, l'ajout de la composition (C) selon l'invention dans une composition PVC permet d'apporter des propriétés adhérentes à ladite composition PVC, propriétés d'adhésion sur des surfaces, notamment verre ou acier. La présente invention permet d'atteindre des forces de pelage supérieures à 20 N, de préférence cette technologie permet d'atteindre des forces d'adhésion supérieure à 40 N.

On entend par « activation de surface » au sens de l'invention une étape réalisée au préalable de l'application de la composition PVC sur la surface inorganique, et permettant de conférer à ladite surface des caractéristiques permettant une adhésion améliorée de la composition PVC.

Cette étape d'activation de surface est réalisée pour que ladite surface soit adaptée à l'application d'une composition PVC et présente des caractéristiques améliorées d'accroche, de mouillabilité, de température de surface de contact et de rapidité de prise en adhésion.

De préférence, l'étape d'activation de surface est choisie parmi un traitement thermique, un microbillage, un nettoyage par solvant, une silicalisation ou un traitement plasma.

On entend par traitement thermique au sens de l'invention un traitement de la surface par action de la chaleur pour modifier les propriétés physiques et éventuellement chimiques de ladite surface. La chaleur peut être apportée par induction, par conduction (plateaux chauffants) ou par convection (four). Le traitement thermique consiste à chauffer la surface à une température comprise entre 50°C et 500°C, de préférence entre 200 et 400°C, par exemple 350°C. De préférence, le traitement thermique est un chauffage radiant, c'est-à-dire un chauffage de la surface par rayonnement infra-rouge jusqu'à une température comprise entre 50°C et 500°C, de préférence entre 200 et 400°C, par exemple 350°C. De préférence, quand l'étape d'activation est un chauffage radiant, la durée d'exposition est comprise entre 10 secondes et 10 minutes, de préférence entre 30 secondes et 60 secondes, par exemple la durée d'exposition est égale à 40 secondes.

On entend par microbillage au sens de l'invention un procédé de traitement de surface par impact consistant à projeter des microbilles sur une surface dans le but de la décaper sans l'abîmer ou de créer une rugosité de surface. De manière générale, les microbilles sont en verre, et sont caractérisées par une dimension spécifique comprise entre 10 et 20 microns.

On entend par traitement plasma au sens de l'invention un traitement de surface à l'aide d'une torche à plasma et en présence d'un gaz vecteur tel que diazote. Ce traitement de surface permet de diminuer la rugosité de la surface ainsi traitée. Ce traitement permet également d'activer la surface en augmentant la mouillabilité et de rendre ladite surface fonctionnelle (par apport de radicaux libres).

On entend par nettoyage par solvant au sens de l'invention le traitement de la surface par tout type de solvant connu de l'homme du métier. En particulier, le solvant peut être choisi parmi les cétones, par exemple méthyl-éthyle-cétone, acétone, ou parmi les alcools, de préférence l'éthanol. De préférence le solvant est le méthyl-éthyle-cétone. Ce nettoyage par solvant est réalisé à température ambiante, de préférence une température comprise entre 15°C et 25°C, la quantité de solvant utilisée est déterminée par l'homme du métier.

On entend par silicalisation au sens de l'invention une méthode permettant de déposer un revêtement SiO₂ sur la surface inorganique, en particulier sur une surface en métal, pour favoriser l'adhésion de la composition PVC comprenant des composés aminosilane, isocyanate ou complexe de titane et/ou zirconium sur ladite surface.

De manière avantageuse selon l'invention, plusieurs de ces étapes peuvent être combinées. De préférence, l'étape de nettoyage par solvant est suivie d'une activation par traitement thermique ou par traitement plasma.

De manière avantageuse, l'étape d'activation de surface est une méthode propre permettant de réduire le temps de cycle. On entend par temps de cycle au sens de l'invention le temps nécessaire pour que la composition PVC comprenant la composition (C) adhère à la surface. De préférence, l'étape d'activation est une méthode propre permettant de favoriser l'adhésion de la composition PVC sur la surface sans usage de primer et d'adhésif avec un temps de cycle acceptable. De préférence, cette étape d'activation permet d'éviter de recourir à un traitement secondaire tel qu'un enlèvement de bavures ou une application de pression.

Selon la surface et la composition (C) de l'invention, l'étape d'activation de surface peut être différente.

De préférence, lorsque la surface est en verre, l'étape d'activation est choisie parmi le traitement thermique, le nettoyage par solvant ou le traitement plasma. De manière avantageuse, lorsque la surface est en verre, l'étape d'activation peut comprendre une étape de nettoyage par solvant suivie d'un traitement thermique ou d'un traitement plasma.

De préférence, lorsque la surface est en métal, l'étape d'activation de surface est choisie parmi le nettoyage par solvant, le traitement thermique, le microbillage, le traitement plasma ou la silicalisation. De manière avantageuse, lorsque la surface est en métal, l'étape d'activation peut comprendre une étape de nettoyage par solvant suivie d'un traitement thermique, ou d'un traitement plasma. De manière avantageuse, lorsque la surface est en métal, l'étape d'activation de surface est un microbillage.

De préférence selon l'invention, lorsque la surface est en verre, le traitement d'activation de surface est un traitement thermique et la composition (C) comprend aminosilane protégé ou non et un isocyanate protégé, ou un aminosilane protégé ou non et un complexe de titane. De préférence, lorsque la surface est en verre, le traitement d'activation de surface est un traitement thermique et la composition (C) comprend un aminosilane protégé et un isocyanate protégé, ou un aminosilane non protégé et un complexe de titane.

De préférence selon l'invention, lorsque la surface est en métal, le traitement d'activation de surface est un traitement thermique et la composition (C) comprend un aminosilane protégé ou non et un isocyanate protégé, ou un aminosilane protégé ou non et un complexe de titane. De préférence, lorsque la surface est en métal, le traitement d'activation de surface est un traitement thermique et la composition (C) comprend un aminosilane protégé et un isocyanate protégé, ou un aminosilane protégé ou non et un complexe de titane.

Selon l'invention, l'application de la composition PVC sur la surface inorganique est réalisée, ultérieurement à l'étape de traitement de surface, par moulage par injection, par extrusion, par rotomoulage ou par moulage par compression, de préférence par extrusion.

On entend par moulage par injection au sens de l'invention un procédé de transformation d'une composition PVC comprenant les étapes suivantes :
- chauffage de la composition à une température comprise entre 140°C et 230°C, de préférence entre 160°C et 190°C,
- injection de la composition PVC sous forme liquide dans un moule,
- refroidissement du moule et la composition jusqu'à une température inférieure à la température de fusion de la composition PVC,
- démoulage.

On entend par extrusion au sens de l'invention un procédé de transformation d'une composition PVC comprenant les étapes suivantes :
- éventuellement chauffage de la composition à une température comprise entre 20°C et 400°C, de préférence entre 100°C et 300°C, encore plus préférentiellement entre 150°C et 250°C,
- compression de la composition chauffée au travers d'une filière ayant la section de la pièce à obtenir,
- refroidissement de la pièce.

On entend par rotomoulage au sens de l'invention un procédé de mise en oeuvre consistant à transformer la composition PVC sous l'apport de chaleur et sous l'effet de la rotation et comprenant les étapes suivantes :
- remplissage d'un moule avec la composition PVC, éventuellement sous forme d'un mélange de poudres ou sous forme liquide,
- mise en rotation du moule, le plus souvent selon deux axes perpendiculaires,
- chauffage du moule entre 200°C et 500°C, de préférence entre 300°C et 400°C, encore plus préférentiellement entre 350°C et 400°C,
- refroidissement du moule et la composition jusqu'à une température inférieure à la température de fusion de la composition PVC,
- démoulage.

On entend par moulage par compression au sens de l'invention l'application d'une composition PVC se présentant sous forme de poudre, de granulés, de semi-solides ou de préformés sur une surface. Lors d'un moulage par compression, le moule dans lequel sont introduites les matières premières est chauffé à une température comprise entre 50 et 100°C avant d'être fermé et pressé, la pression étant alors comprise entre 50 et 300 bars pour obliger la matière à remplir le moule, l'excès de matière étant évacué par des canalisations faites pour ce but, avant que le moule soit refroidi et ouvert pour récupérer l'objet moulé.

De préférence selon l'invention, lorsque la surface est en verre, le traitement d'activation de surface est un traitement thermique et la composition (C) comprend aminosilane protégé ou non et un isocyanate protégé, ou un aminosilane protégé ou non et un complexe de titane, et l'application de la composition PVC est réalisée par extrusion. De préférence, lorsque la surface est en verre, le traitement d'activation de surface est un traitement thermique et la composition (C) comprend un un aminosilane protégé et un isocyanate protégé, ou un aminosilane non protégé et un complexe de titane, et l'application de la composition PVC est réalisée par extrusion.

De préférence selon l'invention, lorsque la surface est en métal, le traitement d'activation de surface est un traitement thermique et la composition (C) comprend un aminosilane protégé ou non et un isocyanate protégé, ou un aminosilane protégé ou non et un complexe de titane, et l'application de la composition PVC est réalisée par extrusion. De préférence, lorsque la surface est en métal, le traitement d'activation de surface est un traitement thermique et la composition (C) comprend un aminosilane protégé et un isocyanate protégé, ou un aminosilane protégé ou non et un complexe de titane, et l'application de la composition PVC est réalisée par extrusion.

La présente invention concerne également une composition PVC auto-adhérente comprenant du PVC et une composition (C) selon l'invention o.

De façon avantageuse, la composition (C) selon l'invention doit être compatible, miscible, ou homogénéisée à la composition PVC. De façon particulièrement avantageuse, la composition (C) selon l'invention doit être soluble dans la composition de PVC et doit pouvoir diffuser de la composition PVC vers l'interface PVC-surface lors du processus de mise en oeuvre afin de pouvoir jouer son rôle d'adhésion par réaction chimique avec le PVC et la surface sur laquelle le PVC doit adhérer.

Les inventeurs ont montré de façon surprenante que la composition (C) selon l'invention peut être ajoutée dans la composition PVC de préférence à moins de 35 % en masse par rapport à la masse de la résine PVC, de préférence entre 5 et 25% en masse, plus préférentiellement entre 7 et 20 % en masse, par exemple 10% en masse. Ces proportions permettent avantageusement un compromis entre la conservation de la stabilité, notamment thermique, du PVC et l'apport de bonnes propriétés d'adhésion au PVC.

La composition PVC selon la présente invention peut comprendre en outre au moins un plastifiant, notamment choisi parmi les phtalates, les trimellitates, les terephtalates, les citrates, les plastifiants polymériques de type polyadipate, polyester sebacate.

De préférence, le plastifiant est utilisé dans la composition PVC de l'invention à raison de 1 à 70 % en masse par rapport à la masse de PVC, de préférence de 20 à 40% en masse.

De façon particulièrement avantageuse, la composition (C) de l'invention est miscible, compatible ou homogénéisée dans le plastifiant ou le mélange de plastifiant mis en oeuvre. De façon particulièrement avantageuse, la composition (C) de l'invention est soluble dans le plastifiant ou le mélange de plastifiant mis en oeuvre.

La composition PVC selon la présente invention peut en outre comprendre des additifs usuels, parmi lesquels on peut citer les stabilisants, par exemple Ca/Zn ; les co-stabilisants ; par exemple phosphites et antioxydants.

De préférence, ces additifs sont présents dans la composition PVC de l'invention à raison de 1 à 30 % en masse par rapport à la masse de PVC, de préférence de 7 à 20 % en masse.

La composition PVC de l'invention présente avantageusement des propriétés d'adhésion sur les surfaces, notamment les surfaces de verre ou d'acier, principalement les surfaces de verre.

Les forces d'adhésion du PVC souple sur les surfaces de verre ont été mesurées par test de pelage. La présente invention permet d'atteindre des forces de pelage supérieures à 20 N, de préférence cette technologie permet d'atteindre des forces d'adhésion supérieure à 40 N.

Une rupture de type cohésive intervient dans le matériau lui-même contrairement à la rupture de type adhésive qui va intervenir à l'interface des deux matériaux assemblés.

Dans le cadre de la présente invention, une rupture est définie comme cohésive quand la force de pelage est supérieure à 40N sur surface de type verre ou métal.

L'invention concerne également l'utilisation de la composition (C) selon l'invention dans une composition PVC pour apporter à ladite composition PVC des propriétés d'adhésion aux surfaces, notamment aux surfaces en verre ou en acier.

La présente invention concerne également un procédé de préparation de la composition (C) qui comprend le mélange d'au moins un aminosilane, protégé ou non, avec au moins un composé choisi parmi un isocyanate, protégé ou non, un complexe de titane et/ou au moins un complexe de zirconium.

La présente invention concerne également un procédé de préparation de la composition (C) qui comprend le mélange d'au moins un aminosilane avec au moins un complexe de titane et/ou au moins un complexe de zirconium.

La présente invention concerne également un procédé de préparation de la composition PVC définie ci-dessus comprenant le mélange de la composition (C) selon l'invention, avec la résine PVC et les éventuels autres composants de la composition (plastifiant, additifs...).

De préférence, la composition PVC de l'invention comprend également au moins un plastifiant. Dans ce mode de réalisation, le procédé de préparation de la composition PVC comprend une première étape de mélange de la composition (C) selon l'invention avec le(s) plastifiant(s), puis l'ajout du mélange ainsi obtenu avec la résine PVC et les éventuels additifs.

Dans un autre mode de réalisation, la composition (C) selon l'invention peut être ajoutée lors du compoundage.

La présente invention concerne également l'utilisation de la composition PVC selon l'invention pour l'encapsulation de paroi vitrée, notamment pour l'encapsulation de paroi vitrée dans le domaine automobile, pour la préparation de produit en PVC renforcé, par exemple le PVC renforcé par des fibres de verre, la présence de la composition (C) selon l'invention permettant d'améliorer l'adhésion du PVC aux fibres de verre. La présente invention est particulièrement adaptée à l'encapsulation de custode en verre dans une composition PVC. La présente invention concerne également des joints comprenant la composition PVC selon l'invention, notamment des joints pour l'encapsulation de paroi vitrée.

De manière avantageuse, la présence, dans la composition PVC, de la composition (C) selon l'invention, permet l'adhésion directe, sans nécessiter d'ajout d'une couche intermédiaire d'adhésion, entre le PVC et la surface à laquelle il doit adhérer.

De manière avantageuse l'encapsulation de la paroi vitrée dans la composition PVC de la présente invention peut se faire de différente manière et notamment par injection d'un joint autour de son support.

De manière particulièrement avantageuse, il est possible de mettre en oeuvre une quantité importante de la composition PVC de l'invention autour des parois vitrées tout en maintenant de bonnes propriétés d'adhésion. Ainsi, il est possible de prévoir des couches de la composition de l'invention de l'ordre d'environ 0,1 µm à environ 30 mm autour des parois vitrées.

La présente invention concerne également l'utilisation de la composition PVC selon la présente invention pour tous les objets nécessitant une adhésion entre le PVC et l'acier galvanisé et l'acier inoxydable, par exemple comme joint pour les barres de toit des véhicules.

La présente invention concerne également des parois vitrées encapsulées dans une composition PVC selon la présente invention, de préférence des custodes en verre encapsulées dans une composition PVC selon la présente invention. La paroi vitrée encapsulée comprend une paroi vitrée entourée de la composition PVC selon l'invention. De préférence, il est possible de mettre en oeuvre une quantité importante de la composition PVC de l'invention autour des parois vitrées tout en maintenant de bonnes propriétés d'adhésion. Ainsi, il est possible de prévoir des couches de la composition de l'invention de l'ordre d'environ 0,1 µm à environ 30 mm autour des parois vitrées.

De manière particulièrement avantageuse les parois vitrées encapsulées ne comprennent pas de couche intermédiaire permettant l'adhésion entre la composition PVC selon l'invention et la paroi vitrée.

De manière particulièrement avantageuse, la composition PVC selon la présente invention peut être mise en oeuvre par tous moyens de transformation, notamment par injection, extrusion ou pressage.

La présente invention va maintenant être décrite à l'aide d'exemples descriptifs non limitatifs.

### Description du test de pelage (détermination de l'adhésion sur une surface)

Le test de pelage consiste à mesurer la force (N) nécessaire à la dissociation de la couche PVC par rapport à celle d'une surface support (plaque de verre ou métal, de préférence acier).

La composition PVC est déposée sur une surface (plaque de verre ou métal, de préférence acier) de 50x10 cm. L'ensemble est introduit dans un four à gradient porté à une température de à une température de 200°C pour surmouler la surface (plaque de verre ou métal, de préférence acier) avec le matériau PVC.

Le test de pelage est réalisé avec un appareil LLOYD Instrument de la société Ametek Company. L'échantillon obtenu est placé dans un appareil de traction la surface étant immobile.

Les conditions du test sont les suivantes :
Vitesse de traverse : 100 mm/mi,
Limite de traverse : 80 mm

Lorsque la force de pelage est supérieure à 40N, la rupture est dite cohésive et traduit une excellente adhésion de la composition sur le substrat.

### Exemple comparatif 1

Une composition PVC est préparée avec une base PVC (Kwert 65), contenant 30 % en masse d'un plastifiant trimellitate T8 commercialisé par ADK Palmarole, 1,5 % en masse de stabilisant (Ca/Zn), 0,5 % en masse de co-stabilisant, (antioxydant type phosphite ADK STAB 1500, commercialisé par Adeka Palmarole), 2 % Tetrabutyl titanate.

Une surface en verre a été traitée à température ambiante par du méthyl-éthyl-cétone avant d'être chauffée à 200°C dans une étuve.

La composition PVC est appliquée par extrusion (Escuyer 40) dans les conditions suivantes :
- température en tête de filière égale à 170°C, avec un profil de température de 160 à 180°C ; et
- vitesse d'extrusion de 35 tours /minute.

Cette composition ne présente aucune adhésion sur la surface de verre.

### Exemple comparatif 2

Une composition PVC est préparée avec une base PVC (Kwert 65), contenant 30 % en masse d'un plastifiant trimellitate T8 commercialisé par ADK Palmarole 1,5 % en masse de stabilisant (Ca/Zn), 0,5 % en masse de co-stabilisant, (antioxydant type phosphite ADK STAB 1500, commercialisé par Adeka Palmarole), 2% de l'additif 3-(aminopropyl)triethoxysilane.

Une surface en verre a été traitée à température ambiante par du méthyl-éthyl-cétone avant d'être chauffée à 200°C dans une étuve.

La composition PVC est appliquée par extrusion (Escuyer 40) dans les conditions suivantes :
- température en tête de filière égale à 170°C, avec un profil de température de 160 à 180°C ; et
- vitesse d'extrusion de 35 tours /minute.

La force de pelage montre que l'adhésion est inférieure à 20 N (rupture adhésive) sur la surface de verre.

### Exemple 1 - Composition PVC selon l'invention

Une composition PVC est préparée avec une base de PVC (kwert 65) contenant 29 % en masse de plastifiant T8-10, 1,5 % en masse de stabilisant (Ca/Zn), 0,5 % en masse de co-stabilisant, 2,9 % en masse du 3-(aminopropyl)triethoxysilane et 1,5 % en masse de Bis[2-[(2-aminoethyl)amino]ethanolato][2-[(2-aminoethyl)amino]ethanolato-O](propan-2-olato)titanate.

Une surface en verre a été traitée à température ambiante par du méthyl-éthyl-cétone avant d'être chauffée à 200°C dans une étuve.

La composition PVC est appliquée par extrusion (Escuyer 40) dans les conditions suivantes :
- température en tête de filière égale à 170°C, avec un profil de température de 160 à 180°C ; et
- vitesse d'extrusion de 35 tours /minute.

La force d'adhésion mesurée par mise en oeuvre du test de pelage est supérieure à 40 N sur la surface de verre. La stabilité thermique du matériau (mesurée à 200°C) est de 30 minutes.

### Exemple 2 - Composition PVC selon l'invention

Une composition PVC est préparée avec une base de PVC (kwert 65) contenant 29 % en masse de plastifiant T8-10, 1,5 % en masse de stabilisant (Ca/Zn), 0,5 % en masse de co-stabilisant, 2,9 % en masse du 3-(aminopropyl)triethoxysilane protégée par une fonction tert-butoxycarbonyle et 1,5 % en masse de Bis[2-[(2-aminoethyl)amino]ethanolato][2-[(2-aminoethyl)amino]ethanolato-O](propan-2-olato)titanate.

Une surface en verre a été traitée à température ambiante par du méthyl-éthyl-cétone avant d'être chauffée à 200°C dans une étuve.

La composition PVC est appliquée par extrusion (Escuyer 40) dans les conditions suivantes :
- température en tête de filière égale à 170°C, avec un profil de température de 160 à 180°C ; et
- vitesse d'extrusion de 35 tours /minute.

La force d'adhésion mesurée par mise en oeuvre du test de pelage est supérieure à 40 N sur la surface de verre. La stabilité thermique mesurée (à 200°C) est de 106 minutes.

### Exemple 3 - Composition PVC selon l'invention

Une composition PVC est préparée avec une base PVC (kwert 65) contenant 26 % en masse de plastifiant T8-10, 1,5 % en masse de stabilisant (Ca/Zn), 0,5 % en masse de co-stabilisant, 10% en masse du 3-(aminopropyl)triethoxysilane et 1,3 % en masse de Tetrabutyl titanate.

Une surface en verre a été traitée à température ambiante par du méthyl-éthyl-cétone avant d'être chauffée à 200°C dans une étuve.

La composition PVC est appliquée par extrusion (Escuyer 40) dans les conditions suivantes :
- température en tête de filière égale à 170°C, avec un profil de température de 160 à 180°C ; et
- vitesse d'extrusion de 35 tours /minute.

La force d'adhésion mesurée par mise en oeuvre du test de pelage est supérieure à 40 N sur la surface de verre.

### Exemple 4 - Composition PVC selon l'invention

Une composition PVC est préparée avec une base PVC (Kwert 70), contenant 27 % en masse de plastifiant T8-10, 1,5 % en masse de stabilisant (Ca/Zn), 0,5 % en masse de co-stabilisant, 5,3 % en masse du 3-(aminopropyl)triethoxysilane protégée par une fonction tert-butoxycarbonyle et 1,4 % en masse de Bis[2-[(2-aminoethyl)amino]ethanolato][2-[(2-aminoethyl)amino]ethanolato-O](propan-2-olato)titanate.

Une surface en verre a été traitée à température ambiante par du méthyl-éthyl-cétone avant d'être chauffée à 200°C dans une étuve.

La composition PVC est appliquée par extrusion (Escuyer 40) dans les conditions suivantes :
- température en tête de filière égale à 170°C, avec un profil de température de 160 à 180°C ; et
- vitesse d'extrusion de 35 tours /minute.

La force d'adhésion mesurée par mise en oeuvre du test de pelage est supérieure à 40 N sur la surface de verre.

### Exemple 5 - Composition PVC selon l'invention

Une composition PVC est préparée avec une base PVC (kwert 65) contenant 29 % en masse T8-10, 1,5 % en masse de stabilisant (Ca/Zn), 0,5 % en masse de co-stabilisant, 2,9 % 3-(trimethoxysilylpropyl)diethylenetriamine protégée par une fonction tert-butoxycarbonyle en masse du et 1 % en masse de Tetrabutyl titanate.

Une surface en verre a été traitée à température ambiante par du méthyl-éthyl-cétone avant d'être chauffée à 200°C dans une étuve.

La composition PVC est appliquée par extrusion (Escuyer 40) dans les conditions suivantes :
- température en tête de filière égale à 170°C, avec un profil de température de 160 à 180°C ; et
- vitesse d'extrusion de 35 tours /minute.

La force d'adhésion mesurée par mise en oeuvre du test de pelage est supérieure à 40 N sur la surface de verre.

### Exemple 6 : Composition PVC selon l'invention

Une composition PVC est préparée avec une base PVC (kwert 65) contenant 29 % en masse T8-10, 1,5 % en masse de stabilisant (Ca/Zn), 0,5 % en masse de co-stabilisant, 5,8 % en masse du 3-trimethoxysilylpropyl)diethylenetriamine et 1,4 % en masse de Tetrabutyl titanate.

Une surface en verre a été traitée à température ambiante par du méthyl-éthyl-cétone avant d'être chauffée à 200°C dans une étuve.

La composition PVC est appliquée par extrusion (Escuyer 40) dans les conditions suivantes :
- température en tête de filière égale à 170°C, avec un profil de température de 160 à 180°C ; et
- vitesse d'extrusion de 35 tours /minute.

La force d'adhésion mesurée par mise en oeuvre du test de pelage est supérieure à 20 N sur la surface de verre et est plus faible que celle du matériau de l'exemple 4.

### Exemple comparatif 3 :

Une composition PVC a été préparée avec une base PVC (Kw 80) contenant 42 % en masse de plastifiant DINP, 1,7 % en masse de stabilisant (Ca/Zn), 0,5 % en masse de co-stabilisant (huile de soja epoxydée), 9 % en masse de charge (CaCO3).

Une surface en verre a été traitée à température ambiante par du méthyl-éthyl-cétone avant d'être chauffée à 200°C dans une étuve.

La composition PVC est appliquée par extrusion (Escuyer 40) dans les conditions suivantes :
- température en tête de filière égale à 170°C, avec un profil de température de 160 à 180°C ; et
- vitesse d'extrusion de 35 tours /minute.

La force de pelage mesurée par mise en oeuvre du test de pelage pour ce matériau est d'environ 2 N sur la surface acier.

Exemple 8 selon l'invention : Un matériau PVC été préparé dans les mêmes conditions que le matériau de l'exemple 6 avec l'ajout de 3-(trimethoxysilylpropyl)diethylenetriamine avec une teneur de 1,2 % en masse et 0,7 % en masse de tetrabutyl titanate.

Une surface en acier inox a été traitée à température ambiante par du méthyl-éthyl-cétone avant d'être chauffée à 200°C dans une étuve.

La composition PVC est appliquée par extrusion (Escuyer 40) dans les conditions suivantes :
- température en tête de filière égale à 170°C, avec un profil de température de 160 à 180°C ; et
- vitesse d'extrusion de 35 tours /minute.

La force de pelage mesurée par mise en oeuvre du test de pelage est de 55, 6N sur la surface acier.

### Exemple 9 selon l'invention :

Une composition PVC est préparée avec une base de PVC (kwert 65) contenant 26 % en masse de plastifiant T8-10, 1,5 % en masse de stabilisant (Ca/Zn), 0,5 % en masse de co-stabilisant, 10 % en masse du 3-(aminopropyl)triethoxysilane protégé par le tert-Butyl carbamates et 1,3 % en masse de polyisocyanate commercial Desmodur BL 3272 MPA. Une surface en verre a été traitée à température ambiante par du méthyl-éthyl-cétone avant d'être chauffée par radiation infra-rouge à une température égale à 300°C pendant 30 secondes. La composition PVC est appliquée par extrusion (Escuyer 40) dans les conditions suivantes :
- température en tête de filière égale à 170°C, avec un profil de température de 160 à 180°C ; et
- vitesse d'extrusion de 35 tours /minute.

La force d'adhésion mesurée après refroidissement par test de pelage du système mis en oeuvre par extrusion est supérieure à 40 N.

### Exemple 10 selon l'invention :

Une composition PVC est préparée avec une base de PVC (kwert 65) contenant 26 % en masse de plastifiant T8-10, 1,5 % en masse de stabilisant (Ca/Zn), 0,5 % en masse de co-stabilisant, 20 % en masse du 3-(aminopropyl)triethoxysilane protégé par le tert-Butyl carbamates et 2,6 % en masse de polyisocyanate commercial Desmodur BL 3272 MPA.

Une surface de verre a été traitée à température ambiante par du méthyl-éthyl-cétone avant d'être chauffée par radiation infra-rouge à une température égale à 300°C pendant 30 secondes. La composition PVC est appliquée par extrusion (Escuyer 40) dans les conditions suivantes :
- température en tête de filière égale à 170°C, avec un profil de température de 160 à 180°C ; et
- vitesse d'extrusion de 35 tours /minute.

La force d'adhésion mesurée après refroidissement par test de pelage du système mis en oeuvre par extrusion est supérieure à 40 N.

### Exemple 11 :

Une composition PVC est préparée avec une base de PVC (kwert 57) contenant 26 % en masse de plastifiant T8-10, 1,5 % en masse de stabilisant (Ca/Zn), 0,5 % en masse de co-stabilisant, 10 % en masse du 3-(aminopropyl)triethoxysilane protégé par le tert-Butyl carbamates et 2.6 % en masse de polyisocyanate commercial Desmodur BL 3272 MPA. La surface de verre a été traitée à température ambiante par du méthyl-éthyl-cétone avant d'être chauffée par radiation infra-rouge à une température égale à 300°C pendant 30 secondes. La composition PVC est appliquée par extrusion (Escuyer 40) dans les conditions suivantes :
- température en tête de filière égale à 170°C, avec un profil de température de 160 à 180°C ; et
- vitesse d'extrusion de 35 tours /minute.

La force d'adhésion mesurée après refroidissement par test de pelage du système mis en oeuvre par extrusion est supérieure à 40 N.

### Exemple 12 selon l'invention :

Une composition PVC est préparée avec une base de PVC (kwert 65) contenant 26 % en masse de plastifiant T8-10, 1,5 % en masse de stabilisant (Ca/Zn), 0,5 % en masse de co-stabilisant, 10 % en masse du 3-(aminopropyl)triethoxysilane protégé par le tert-Butyl carbamates et 2.6 % en masse de polyisocyanate commercial Desmodur BL 3272 MPA.

La surface de verre a été traitée à température ambiante par du méthyl-éthyl-cétone avant d'être chauffée à une température égale à 200°C dans une étuve. La composition PVC est appliquée par injection dans les conditions suivantes :
- température en tête de filière égale à 180°C, avec un profil de température de 165 à 180°C ;
- un temps de maintien ou refroidissement de 30 secondes est appliqué ;
- la pression de fermeture du moule est de 50 bars ;
- le temps d'injection étant de 1.6 seconde ;
- le moule est maintenu à 35°C

Le système PVC/verre est alors immédiatement après son retrait du moule, soumis à une température de 300°C.

La force d'adhésion mesurée après refroidissement par test de pelage du système mis en oeuvre par injection est supérieure à 40 N.

### Exemple 13 selon l'invention :

Une composition PVC est préparée avec une base de PVC (kwert 65) contenant 39 % en masse de plastifiant TOTM, 1,5 % en masse de stabilisant (Ca/Zn), 0,5 % en masse de co-stabilisant, 1.4 % en masse du 3-(aminopropyl)triethoxysilane et 0,85% en masse de complexe de titanate commercial TNBT.

Une surface métallique en acier inox a été traitée à température ambiante par du méthyl-éthyl-cétone avant d'être chauffée par radiation infra-rouge à une température égale à 350°C. La composition PVC est appliquée par extrusion (Escuyer 40) dans les conditions suivantes :
- température en tête de filière égale à 170°C, avec un profil de température de 160 à 180°C ; et
- vitesse d'extrusion de 35 tours /minute.

La force d'adhésion mesurée après refroidissement par test de pelage du système mis en oeuvre par extrusion est supérieure à 40 N.

### Exemple 14 selon l'invention :

Une composition PVC est préparée avec une base de PVC (kwert 57) contenant 39 % en masse de plastifiant TOTM, 1,5 % en masse de stabilisant (Ca/Zn), 0,5 % en masse de co-stabilisant, 2.8% en masse du 3-(aminopropyl)triethoxysilane et 0,85% en masse de complexe de titanate commercial Kr44.

Une surface en acier inox a été traitée à température ambiante par du méthyl-éthyl-cétone avant d'être chauffée par radiation infra-rouge à une température égale à 350°C. La composition PVC est appliquée par extrusion (Escuyer 40) dans les conditions suivantes :
- température en tête de filière égale à 170°C, avec un profil de température de 160 à 180°C ; et
- vitesse d'extrusion de 35 tours /minute.

La force d'adhésion mesurée après refroidissement par test de pelage du système mis en oeuvre par extrusion est supérieure à 40 N.

## Revendications

1. Procédé d'application, sur une surface inorganique, d'une composition PVC auto-adhérente comprenant une composition (C) comprenant :
- un aminosilane protégé ou non ; et
- au moins un composé choisi parmi un complexe de titane, un complexe de zirconium et/ou un composé isocyanate protégé ou non ;
ledit procédé comprenant une étape d'activation de ladite surface choisie parmi un traitement thermique, une étape de microbillage, une étape de traitement plasma, un nettoyage par solvant et une étape de silicalisation.

2. Procédé selon la revendication 1 dans lequel l'application de la composition PVC est réalisée, ultérieurement à l'étape de traitement de surface, par moulage par injection, par extrusion, par rotomoulage ou par moulage par compression, de préférence par extrusion.

3. Procédé selon l'une des revendications 1 ou 2 pour lequel la surface inorganique est une surface en verre ou en métal.

4. Procédé selon l'une quelconque des revendications 1 à 3 pour lequel la surface inorganique est en verre.

5. Procédé selon l'une quelconque des revendications 1 à 3 pour lequel la surface inorganique est en métal.

6. Procédé selon la revendication 4 pour lequel la composition (C) comprend :
- un aminosilane protégé ou non ; et
- un isocyanate protégé ou un complexe de titane.

7. Procédé selon les revendications 4 ou 6 pour lequel l'activation de surface est réalisée par traitement thermique, de préférence par chauffage radiant.

8. Procédé selon l'une quelconque des revendications 4, 6 ou 7 dans lequel l'application de la composition PVC est réalisée par extrusion.

9. Procédé selon la revendication 5 pour lequel la composition (C) comprend :
- un aminosilane protégé ou non ; et
- un isocyanate protégé ou un complexe de titane.

10. Procédé selon les revendications 5 ou 9 pour lequel l'activation de surface est réalisée par traitement thermique, de préférence par chauffage radiant.

11. Procédé selon l'une quelconque des revendications 5, 9 ou 10 dans lequel l'application de la composition PVC est réalisée par extrusion.

## Patentansprüche

1. Verfahren zum Auftragen, auf einer anorganischen Oberfläche, einer selbsthaftenden PVC-Zusammensetzung, die eine Zusammensetzung (C) enthält, enthaltend:
- ein geschütztes oder nicht geschütztes Aminosilan; und
- mindestens eine Verbindung, die ausgewählt ist aus einem Titankomplex, einem Zirkoniumkomplex und/oder einer geschützten oder nicht geschützten Isocyanatverbindung;
wobei das Verfahren einen Schritt der Aktivierung der Oberfläche ausgewählt aus einer chemischen Behandlung, einen Schritt der Kugelstrahlung, einen Schritt der Plasmabehandlung, eine Reinigung durch Lösemittel und einen Schritt der Silikalisierung umfasst.

2. Verfahren nach Anspruch 1, bei dem das Auftragen der PVC-Zusammensetzung, nach dem Schritt der Oberflächenbehandlung, durch Spritzgießen, durch Extrusion, durch Rotationsformen, durch Druckgießen, vorzugsweise durch Extrusion erfolgt.

3. Verfahren nach einem der Ansprüche 1 oder 2, wobei die anorganische Oberfläche eine Oberfläche aus Glas oder aus Metall ist.

4. Verfahren nach einem der Ansprüche 1 bis 3, bei dem die anorganische Oberfläche eine Oberfläche aus Glas ist.

5. Verfahren nach einem der Ansprüche 1 bis 3, bei dem die anorganische Oberfläche eine Oberfläche aus Metall ist.

6. Verfahren nach Anspruch 4, bei dem die Zusammensetzung (C) Folgendes enthält:
- ein geschütztes oder nicht geschütztes Aminosilan; und
- ein geschütztes oder nicht geschütztes Isocyanat oder einen Titankomplex.

7. Verfahren nach einem der Ansprüche 4 oder 6, bei dem die Aktivierung der Oberfläche durch chemische Behandlung, vorzugsweise durch Strahlungserwärmung, erfolgt.

8. Verfahren nach einem der Ansprüche 4, 6 oder 7, bei dem das Auftragen der PVC-Zusammensetzung durch Extrusion erfolgt.

9. Verfahren nach Anspruch 5, bei dem die Zusammensetzung (C) Folgendes enthält:
- ein geschütztes oder nicht geschütztes Aminosilan; und
- ein geschütztes oder nicht geschütztes Isocyanat oder einen Titankomplex.

10. Verfahren nach einem der Ansprüche 5 oder 9, bei dem die Aktivierung der Oberfläche durch chemische Behandlung, vorzugsweise durch Strahlungserwärmung, erfolgt.

11. Verfahren nach einem der Ansprüche 5, 9 oder 10, bei dem das Auftragen der PVC-Zusammensetzung durch Extrusion erfolgt.

## Claims

1. Method for applying, to an inorganic surface, a self-adhesive PVC composition comprising a composition (C) comprising:
- an optionally protected aminosilane; and
- at least one compound selected from among a titanium complex, zirconium complex and/or an optionally protected isocyanate compound;
said method comprising an activation step of said surface, selected from among heat treatment, a shot peening step, plasma treatment step, solvent cleaning and a silicification step.

2. The method according to claim 1 wherein the PVC composition, after the surface treatment step, is applied by injection moulding, by extrusion, by rotational moulding or by compression moulding, preferably by extrusion.

3. The method according to one of claims 1 or 2, wherein the inorganic surface is a surface in glass or metal.

4. The method according to any of claims 1 to 3, wherein the inorganic surface is in glass.

5. The method according to any of claims 1 to 3, wherein the inorganic surface is in metal.

6. The method according to claim 4, wherein the composition (C) comprises:
- an optionally protected aminosilane; and
- a protected isocyanate or a titanium complex.

7. The method according to claims 4 or 6, wherein surface activation is performed by heat treatment, preferably via radiating heat.

8. The method according to any of claims 4, 6 or 7, wherein the application of the PVC composition is performed by extrusion.

9. The method according to claim 5, wherein the composition (C) comprises:
- an optionally protected aminosilane; and
- a protected isocyanate or a titanium complex.

10. The method according to claims 5 or 9, wherein surface activation is performed by heat treatment, preferably via radiating heat.

11. The method according to any of claims 5, 9 or 10, wherein application of the PVC composition is performed by extrusion.
